# EUROPEAN PATENT APPLICATION

(11) **EP 4 708 434 A1**
(43) Date of publication of application: **11.03.2026**
(21) Application number: 25197218.8
(22) Date of filing: 21.08.2025
(51) Int. Cl.: H01M 10/0562, H01M 4/38, H01M 4/58

(54) **BATTERY**

(30) Priority: 27.08.2024 JP 2024145394; 07.08.2025 JP 2025132277
(71) Applicant: TOYOTA JIDOSHA KABUSHIKI KAISHA, Toyota-shi, Aichi-ken 471-8571 (JP); Tohoku University, Sendai-shi, Miyagi 980-8577 (JP)
(72) Inventor: OHNO, Saneyuki, Sendai-shi, Miyagi, 980-8577 (JP); HUEBNER, Jan Fryderyk, Sendai-shi, Miyagi, 980-8577 (JP); ASAKURA, Ryo, Toyota-shi, Aichi-ken, 471-8571 (JP); SHIOTANI, Shinya, Toyota-shi, Aichi-ken, 471-8571 (JP)
(74) Representative: TBK

(57) **Abstract**

A battery with excellent cycle characteristics, the battery comprising a cathode layer, an electrolyte layer and an anode layer, wherein the cathode layer comprises a cathode active material and an add-in material; the cathode active material comprises a S element; the add-in material comprises a Cl element and at least one metal element selected from the group consisting of a Mn element, a Y element, a Sn element, a V element, a Nb element and a Ta element; and the add-in material is less than 10% by mass of the cathode layer.

## Description

### TECHNICAL FIELD

The disclosure relates to a battery.

### BACKGROUND

Various studies have been proposed for a battery as disclosed in Patent Document 1.

Patent Document 1: Japanese Patent Application Laid-Open (JP-A) No. 2019-212615

Non-patent Literature 1: Tatsuki Shigedomi et al., Chem. Mater. 2022, 34, 9745-9752 "Li₂S-V₂S₃-LiI Bifunctional Material as the Positive Electrode in the All-Solid-State Li/S Battery"

A battery in which a conventional sulfur-based cathode active material containing a sulfur element is used in the cathode layer, has a shortage of ion conducting paths connecting to the sulfur-based cathode active material of the cathode layer. Accordingly, the usage of the cathode active material is low, and there is a room for improvement in the discharge capacity and cycle characteristics of the battery.

### SUMMARY

The present disclosure was achieved in light of the above circumstances. An object of the present disclosure is to provide a battery with excellent cycle characteristics.

The present disclosure includes the following embodiments.
<1> A battery comprising a cathode layer, an electrolyte layer and an anode layer,
   wherein the cathode layer comprises a cathode active material and an add-in material;
   wherein the cathode active material comprises a S element;
   wherein the add-in material comprises a Cl element and at least one metal element selected from the group consisting of a Mn element, a Y element, a Sn element, a V element, a Nb element and a Ta element; and
   wherein the add-in material is less than 10% by mass of the cathode layer.
<2> A battery comprising a cathode layer, an electrolyte layer and an anode layer,
   wherein the cathode layer comprises a cathode active material and an add-in material;
   wherein the cathode active material comprises a S element;
   wherein the add-in material comprises a Cl element and at least one metal element selected from the group consisting of a Mg element and an In element; and
   wherein the add-in material is 15% by mass or less of the cathode layer.
<3> The battery according to <1> or <2>, wherein the add-in material is 1% by mass or more and 5% by mass or less of the cathode layer.
<4> The battery according to <1> or <2>,
   wherein the anode layer comprises an anode active material, and
   wherein the anode active material is at least one selected from the group consisting of elemental Li and a Li alloy.
<5> An all-solid-state battery comprising the battery defined by <1> or <2>, wherein the electrolyte layer is a solid electrolyte layer containing a solid electrolyte.

According to the present disclosure, the effect of obtaining a battery with excellent cycle characteristics is exerted.

### BRIEF DESCRIPTION OF THE DRAWINGS

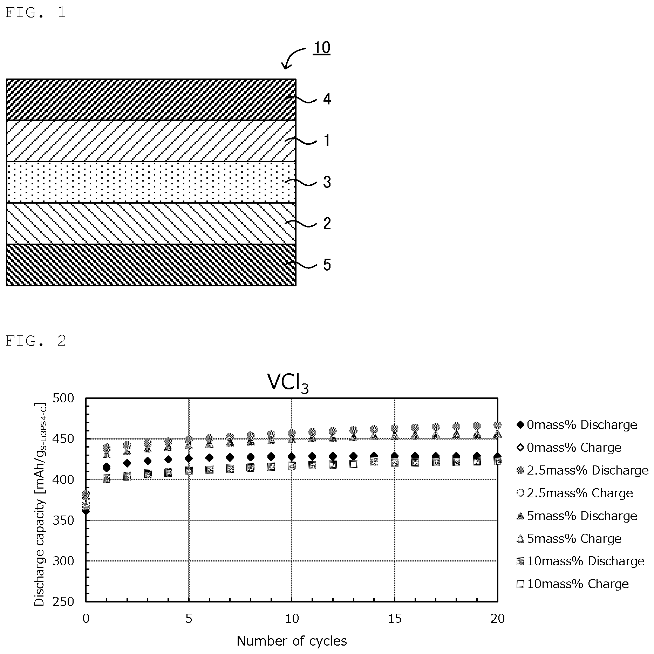

FIG. 1 is a schematic cross-sectional view of the battery of the present disclosure.
FIG. 2 is a graph showing the relationship between the number of charge and discharge cycles of the all-solid-state battery in which the add-in material was VCl₃ and the discharge capacity of the all-solid-state battery based on the mass of the cathode layer excluding the mass of the add-in material.

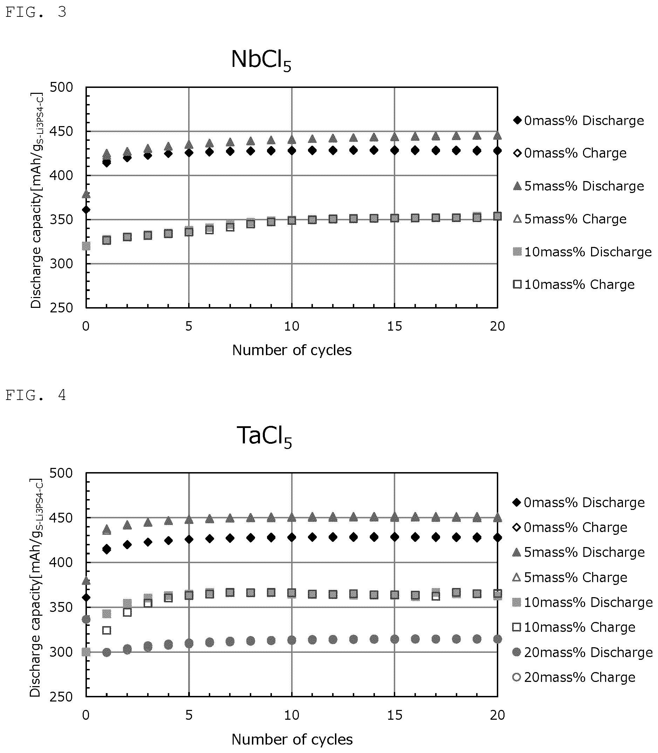

FIG. 3 is a graph showing the relationship between the number of charge and discharge cycles of the all-solid-state battery in which the add-in material was NbCl₅ and the discharge capacity of the all-solid-state battery based on the mass of the cathode layer excluding the mass of the add-in material.
FIG. 4 is a graph showing the relationship between the number of charge and discharge cycles of the all-solid-state battery in which the add-in material was TaCl₅ and the discharge capacity of the all-solid-state battery based on the mass of the cathode layer excluding the mass of the add-in material.

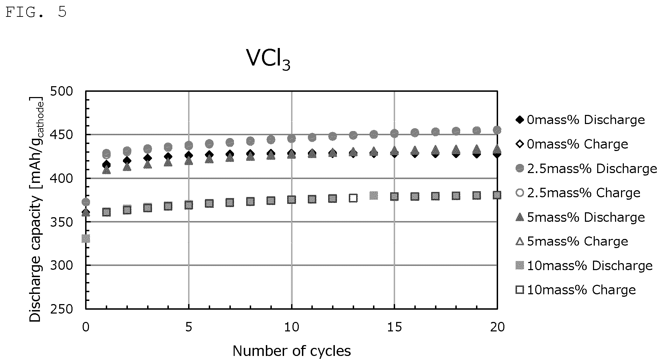

FIG. 5 is a graph showing the relationship between the number of charge and discharge cycles of the all-solid-state battery in which the add-in material was VCl₃ and the discharge capacity of the all-solid-state battery based on the mass of the cathode layer including the mass of the add-in material.

### DETAILED DESCRIPTION

Hereinafter, the embodiments of the present disclosure will be described in detail. Matters that are required to implement the present disclosure (such as common solid electrolyte material structures and production processes not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art. In the present disclosure, "to" which shows a numerical range is used to describe a range in which the numerical values described before and after "to" indicate the lower limit value and the upper limit value, both of which are included in the numerical range. Also in the present disclosure, as for the lower limit value "A or more" and the upper limit value "B or less" (A and B are desired numbers), a desired numeral range can be formed by combining them.

In the present disclosure, unless otherwise noted, the average particle diameter of the particles is the value of a median diameter (D50) which is a particle diameter at an accumulated value of 50% in a volume-based particle size distribution measured by laser diffraction and scattering particle size distribution measurement.

### (1) First embodiment

According to the present disclosure, the following battery is provided: a battery comprising a cathode layer, an electrolyte layer and an anode layer,
wherein the cathode layer comprises a cathode active material and an add-in material;
wherein the cathode active material comprises a S element;
wherein the add-in material comprises a Cl element and at least one metal element selected from the group consisting of a Mn element, a Y element, a Sn element, a V element, a Nb element and a Ta element; and
wherein the add-in material is less than 10% by mass of the cathode layer.

### (2) Second embodiment

According to the present disclosure, the following battery is provided: a battery comprising a cathode layer, an electrolyte layer and an anode layer,
wherein the cathode layer comprises a cathode active material and an add-in material;
wherein the cathode active material comprises a S element;
wherein the add-in material comprises a Cl element and at least one metal element selected from the group consisting of a Mg element and an In element; and
wherein the add-in material is 15% by mass or less of the cathode layer.

In the present disclosure, a predetermined amount of the add-in material containing the Cl element and the predetermined metal element, is added to the cathode layer containing the sulfur-based cathode active material which contains the sulfur element. Accordingly, the ion transporting ability of the cathode layer can be improved, and the cycle characteristics of the battery can be improved. Also in the present disclosure, the discharge capacity of the battery can be increased under a specific condition.

The battery of the present disclosure includes a cathode layer, an electrolyte layer and an anode layer. In general, the battery includes a cathode, an electrolyte layer and an anode.

The battery of the present disclosure includes a cathode layer, an electrolyte layer and an anode layer. In general, the battery includes a cathode, an electrolyte layer and an anode.

FIG. 1 is a schematic cross-sectional view of the battery of the present disclosure. A battery 10 shown in FIG. 1 includes a cathode layer 1, an anode layer 2, an electrolyte layer 3 disposed between the cathode layer 1 and the anode layer 2, a cathode collector 4 for collecting electrical current from the cathode layer 1, and an anode collector 5 for collecting electrical current from the anode layer 2.

### [Cathode]

The cathode includes the cathode layer. As needed, it further includes a cathode collector.

The cathode layer contains the cathode active material and the add-in material. As needed, the cathode layer may further contain a sulfur-containing compound, an electroconductive material, a binder and so on.

The thickness of the cathode layer may be 0.1 µm or more, may be 1 µm or more, may be 30 µm or more, may be 1000 µm or less, may be 500 µm or less, or may be 100 µm or less, for example.

The cathode active material contains a S element. The cathode active material may be elemental sulfur, Li₃PS₄ or the like. As the elemental sulfur, examples include, but are not limited to, S₈ sulfur. S₈ sulfur may have the following three crystalline forms: α-sulfur (rhombic sulfur), β-sulfur (monoclinic sulfur) and γ-sulfur (monoclinic sulfur). In the present disclosure, it may have any one of the forms.

The cathode active material may be in a particulate form. The cathode active material may be primary particles, or it may be secondary particles (aggregated primary particles).

The average particle diameter (D50) of the cathode active material is not particularly limited. For example, the average particle diameter may be 0.01 µm or more, may be 0.5 µm or more, may be 50 µm or less, or may be 30 µm or less.

The cathode active material may be 20% by mass or more, may be 30% by mass or more, may be 40% by mass or more, or may be 50% by mass or more of the cathode layer, for example. When the percentage of the cathode active material is too small, there is a possibility that a sufficient energy density is not obtained. On the other hand, the cathode active material may be 80% by mass or less, may be 70% by mass or less, or may be 60% by mass or less of the cathode layer, for example. When the percentage of the cathode active material is too large, the ion conductivity and electron conductivity of the cathode layer may relatively decrease.

The add-in material may contain a Cl element and at least one metal element selected from the group consisting of a Mg element, an In element, a Mn element, a Y element, a Sn element, a V element, a Nb element and a Ta element.

In the first embodiment, the metal element contained in the add-in material is at least one selected from the group consisting of a Mn element, a Y element, a Sn element, a V element, a Nb element and a Ta element.

In the second embodiment, the metal element contained in the add-in material is at least one selected from the group consisting of a Mg element and an In element.

The add-in material may be at least one metal chloride selected from the group consisting of MgCl₂, InCl₃, MnCl₂, YCl₃, SnCl₂, VCl₃, NbCl₅ and TaCl₅.

In the first embodiment, the add-in material may be at least one metal chloride selected from the group consisting of MnCl₂, YCl₃, SnCl₂, VCl₃, NbCl₅ and TaCl₅.

In the second embodiment, the add-in material may be at least one selected from the group consisting of MgCl₂ and InCl₃.

The add-in material may be 15% by mass or less, may be 10% by mass or less, may be less than 10% by mass, may be 5% by mass or less, may be 3.5% by mass or less, may be 1% by mass or more, may be 1.5% by mass or more, or may be 2.5% by mass or more of the cathode layer.

When the metal element contained in the add-in material is at least one selected from the group consisting of a Mn element, a Y element, a Sn element, a V element, a Nb element and a Ta element, the add-in material is only required to be less than 10% by mass of the cathode layer, and it may be 5% by mass or less, may be 3.5% by mass or less, may be 1% by mass or more, may be 1.5% by mass or more, or may be 2.5% by mass or more of the cathode layer.

When the metal element contained in the add-in material is at least one selected from the group consisting of a Mg element and an In element, the add-in material is only required to be 15% by mass or less of the cathode layer, and it may be 10% by mass or less, may be 5% by mass or less, may be 3.5% by mass or less, may be 1% by mass or more, may be 1.5% by mass or more, or may be 2.5% by mass or more of the cathode layer.

The cathode layer may contain, as the sulfur-containing compound, a sulfur-containing compound containing a P element and a S element (i.e., the first sulfur-containing compound). The cathode layer may further contain, for example, a sulfur-containing compound containing a S element and an element other than a P element, such as Ge, Sn, Si, B and Al (i.e., the second sulfur-containing compound). When the cathode layer further contains the second sulfur-containing compound, the cathode layer may contain the first sulfur-containing compound as the main sulfur-containing compound. In the present disclosure, the main sulfur-containing compound means that when the total amount of the sulfur-containing compounds is defined as 100% by mass, the amount of the first sulfur-containing compound is 50% by mass or more.

The first sulfur-containing compound may contain the ortho structure of the P element. In particular, the ortho structure of the P element is a PS₄ structure. The first sulfur-containing compound may be Li₃PS₄. The second sulfur-containing compound may contain the ortho structure of the M element (M is Ge, Sn, Si, B or Al, for example). As the ortho structure of the M element, examples include, but are not limited to, a GeS₄ structure, a SnS₄ structure, a SiS₄ structure, a BS₃ structure and an AlS₃ structure. Meanwhile, the first sulfur-containing compound may contain a sulfide of the P element (e.g., P₂S₅). The second sulfur-containing compound may also contain a sulfide of the M element (MₓS_{y} where x and y are each an integer that gives, depending on the type of M, electroneutrality with S). As the sulfide of the M element (MₓS_{y}), examples include, but are not limited to, GeS₂, SnS₂, SiS₂, B₂S₃ and Al₂S₃. These sulfides are the residues of starting materials, for example.

The sulfur-containing compound may be 1% by mass or more, may be 10% by mass or more, may be 20% by mass or more, may be 50% by mass or less, may be 30% by mass or less, may be 25.2% by mass or less, or may be 25% by mass or less of the cathode layer, for example.

The cathode layer may contain an electroconductive material. The electron conductivity of the cathode layer is increased by adding the electroconductive material. As the electroconductive material, examples include, but are not limited to, a carbonaceous material, metal particles and an electroconductive polymer. As the carbonaceous material, examples include, but are not limited to, a particulate carbonaceous material such as Acetylene Black (AB) and Ketjen Black (KB) and a fibrous carbonaceous material such as vapor-grown carbon fibers (VGCF), carbon nanotubes (CNT) and carbon nanofibers (CNF).

The electroconductive material may be 0.1% by mass or more, may be 0.5% by mass or more, or may be 1.0% by mass or more of the cathode layer, for example. When the percentage of the electroconductive material is too small, the cathode layer may have a shortage of ion conducting paths. On the other hand, the electroconductive material may be 30% by mass or less, may be 21.6% by mass or less, may be 5% by mass or less, or may be 3% by mass or less of the cathode layer, for example. When the percentage of the electroconductive material is too large, the percentage of the cathode active material is relatively small, and the low energy density of the cathode layer may decrease.

The cathode layer may contain a binder. As the binder, examples include, but are not limited to, styrene-butadiene rubber (SBR), acrylonitrile-butadiene rubber (NBR), butadiene rubber (BR), polyvinylidene fluoride (PVDF), polytetrafluoroethylene (PTFE), a styrene-isoprene-styrene block copolymer (SIS) and an ethylene-propylene-diene copolymer (EPDM).

The binder may be 0.5% by mass or more of the cathode layer, for example. When the percentage of the binder is too small, there is a possibility that an increase in resistance, which is due to charging and discharging of the battery, cannot be sufficiently reduced. On the other hand, the binder may be 5% by mass or less of the cathode layer, for example. When the percentage of the binder is too large, the percentage of the cathode active material is relatively small, and the energy density of the cathode layer may decrease.

The method for producing the cathode layer is not particularly limited. As the cathode layer forming method, examples include, but are not limited to, the following method: a raw material mixture containing the cathode active material, the add-in material, the electroconductive material and so on are subjected to mechanical milling to obtain a cathode mixture, and the cathode mixture is pressed, thereby obtaining the cathode layer.

The mechanical milling is not particularly limited, as long as it is a method for mixing the raw material mixture by applying mechanical energy thereto. The mechanical milling may be carried out by, for example, a ball mill, a vibrating mill, a turbo mill, mechanofusion, a disk mill or the like. Of them, the mechanical milling may be carried out by a planetary ball mill.

The mechanical milling may be dry mechanical milling or wet mechanical milling. Wet mechanical milling uses a liquid, and the liquid may be aprotic to the extent that does not generate hydrogen sulfide. As the liquid, examples include, but are not limited to, an aprotic liquid such as a polar aprotic liquid and a non-polar aprotic liquid.

The condition of the mechanical milling is appropriately determined to obtain the desired cathode mixture. For example, in the case of using a planetary ball mill, the raw material mixture and grinding balls are put in the container of the ball mill, and the mechanical milling is carried out at a predetermined plate rotational frequency for a predetermined time. The plate rotational frequency may be 200 rpm or more, may be 300 rpm or more, or may be 510 rpm or more, for example. On the other hand, the plate rotational frequency may be 800 rpm or less, or it may be 600 rpm or less, for example. The mechanical milling time using the planetary ball mill may be 30 minutes or more, may be 4 hours or more, or may be 5 hours or more, for example. On the other hand, the mechanical milling time using the planetary ball mill may be 100 hours or less, or it may be 60 hours or less, for example. The raw material for the container and grinding balls used in the planetary ball mill may be ZrO₂, Al₂O₃ or the like, for example. The diameter of the grinding balls may be 1 mm or more and 20 mm or less, for example. The mechanical milling may be carried out in an inert gas atmosphere such as Ar gas atmosphere.

The pressure applied when pressing the cathode mixture may be 0.1 ton/cm² or more, may be 0.5 ton/cm² or more, or may be 1 ton/cm² or more, for example. On the other hand, the pressure may be 10 ton/cm² or less, may be 8 ton/cm² or less, or may be 6 ton/cm² or less, for example.

As the material for the cathode collector, examples include, but are not limited to, SUS, Cr, Au, Pt, Zn, aluminum, copper, nickel, iron, titanium and carbon. The thickness of the cathode collector may be 0.1 µm or more and may be 100 µm or less, for example. The cathode collector may be in a foil form, a plat form or the like. The structure of the cathode collector may be such that a buffer layer, an elastic layer or a positive temperature coefficient (PTC) thermistor layer is disposed on the surface.

### [Anode]

The anode includes the anode layer. As needed, it further includes an anode collector.

The anode layer contains an anode active material. As needed, the anode layer may contain an electroconductive material, a binder and so on.

As the anode active material, examples include, but are not limited to, a Li-based active material.

As the Li-based active material, examples include, but are not limited to, elemental Li and a Li alloy. The Li alloy contains a metal element other than lithium, such as Mg, Ag, In, Sn, Si, Ga, Au and Pt.

As the electroconductive material and binder used in the anode layer, examples include, but are not limited to, those that can be incorporated in the above-described cathode layer.

As the material for the anode collector, examples include, but are not limited to, SUS, aluminum, copper, nickel, iron, titanium and carbon. The thickness of the anode collector may be in a range of from 1 µm to 50 µm, for example. The anode collector may be in a foil form, a plate form or the like, for example. The structure of the anode collector may be such that a buffer layer, an elastic layer or a PTC thermistor layer is disposed on the surface.

### [Electrolyte layer]

The electrolyte layer is a layer formed between the cathode layer and the anode layer, and it contains at least an electrolyte. The electrolyte may be a solid electrolyte. The electrolyte layer may be a solid electrolyte layer composed of a solid component containing a solid electrolyte.

The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte. Of them, the solid electrolyte may be a sulfide solid electrolyte, from the viewpoint of increasing the ion conductivity.

The sulfide solid electrolyte is an electrolyte which contains a S element as the main component of its anion component. In general, the sulfide solid electrolyte contains at least a Li element and a S element. The sulfide solid electrolyte may further contain a Me element (Me is at least one selected from the group consisting of P, As, Sb, Si, Ge, Sn, B, Al, Ga and In). Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, xLi₂S·(1-x)P₂S₅ (where 0.5 ≤ x < 1) and yLiI·zLiBr·(100-y-z)(xLi₂S·(1-x)P₂S₅) (where 0.5 ≤ x < 1, 0 ≤ y ≤ 30 and 0 ≤ z ≤ 30). In these compositions, x may satisfy 0.7 ≤ x ≤ 0.8. Another example of the composition of the sulfide solid electrolyte is Li₇₋ₓPS₆₋ₓXₓ (where X is at least one selected from the group consisting of F, Cl, Br and I, and x satisfies 0 ≤ x < 2). Another example of the composition of the sulfide solid electrolyte is Li₄₋ₓMq₁₋ₓPₓS₄ (where 0 < x < 1 and Mq is at least one selected from the group consisting of Al, Zn, In, Ge, Si, Sn, Sb, Ga and Bi). As the sulfide solid electrolyte, examples include, but are not limited to, Li₆PS₅Cl, LiI-LiBr-Li₂S-P₂S₅, LiI-Li₂S-P₂S₅, LiI-Li₂S-P₂O₅ and LiI-Li₃PO₄-P₂S₅.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be Li₂O-B₂O₃-P₂O₅, Li₂O-SiO₂, Li₂O-B₂O₃, Li_{1.3}Al_{0.3}Ti_{0.7}(PO₄)₃, Li₅La₃Ta₂O₁₂, Li₇La₃Zr₂O₁₂, Li₆BaLa₂Ta₂O₁₂, Li_{3.6}Si_{0.6}P_{0.4}O₄, Li₄SiO₄, Li₃PO₄, Li₃₊ₓPO₄₋ₓNₓ (where 1 ≤ x ≤ 3) or the like.

For example, the halide solid electrolyte may be a solid electrolyte containing Li, D and X (D is at least one selected from the group consisting of Ti, Al and Y, and X is F, Cl or Br).

The solid electrolyte may be in a particulate form, from the viewpoint of good handleability.

The average particle diameter (D50) of the solid electrolyte particles is not particularly limited. It may be from 1 nm to 100 µm.

The solid electrolyte may be one kind of solid electrolyte, or it may be two or more kinds of solid electrolytes. In the case of using two or more kinds of solid electrolytes, they may be mixed together, or they may be formed into layers to obtain a multilayer structure.

The percentage of the solid electrolyte in the electrolyte layer is not particularly limited. For example, the solid electrolyte may be 50% by mass or more, may be 60% by mass or more, may be 70% by mass or more, or may be 100% by mass of the electrolyte layer. An electrolytic solution may be contained in the electrolyte layer, and the electrolytic solution may be less than 10% by mass of the electrolyte layer. The solid electrolyte may be a composite solid electrolyte containing an inorganic solid electrolyte and a polymer electrolyte.

When the electrolyte layer is a solid electrolyte layer, the solid electrolyte layer contains the solid electrolyte. As needed, it contains a binder and so on.

As the binder, examples include, but are not limited to, a binder that can be incorporated in the above-described cathode layer.

When the solid electrolyte layer contains the binder, the content of the binder may be from 0% by mass to 10% by mass, with respect to the total amount of the solid electrolyte layer.

The thickness of the electrolyte layer may be 0.1 µm or more, may be 1000 µm or less, may be 500 µm or less, or may be 100 µm or less, for example.

In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure may be 0.1 MPa or more, may be 1 MPa or more, or may be 5 MPa or more, for example. On the other hand, the fixing pressure may be 100 MPa or less, may be 50 MPa or less, or may be 20 MPa or less, for example.

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid-state battery or an all-solid-state battery. In the present disclosure, the semi-solid-state battery is a battery in which the electrolyte layer contains a solid component (e.g., a solid electrolyte) and a liquid component (e.g., an ionic liquid). In the present disclosure, the all-solid-state battery is a battery in which the electrolyte layer contains, as the electrolyte, a solid component (e.g., a solid electrolyte) only. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used in the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

### Examples

### [Examples 1 and 2 and Comparative Examples 1 and 2]

### (Production of cathode mixture)

Elemental S (a cathode active material), Li₃PS₄ (a sulfur-containing compound) and Ketjen Black (an electroconductive material (it may be referred to as "C") were weighed in a mass ratio of 53.2:25.2:21.6. Then, a metal chloride (VCl₃) was weighed out so that it was 0% by mass (in Comparative Example 1), 2.5% by mass (in Example 1), 5% by mass (in Example 2) and 10% by mass (in Comparative Example 2) of the cathode layer. They were mixed to obtain a S-Li₃PS₄-C-VCl₃ mixture. Next, in each example, 0.2 g of the mixture and 30 g of zirconia balls (diameter 5 mm) were put in the pot of a planetary ball mill, and mechanical milling was carried out thereon by the planetary ball mill at 600 rpm for a total of 4 hours, thereby obtaining a cathode mixture.

### (production of cell)

Using the produced cathode mixture, a cell (diameter 10 mm) was produced by the following steps.

First, a sulfide solid electrolyte (Li₆PS₅Cl) was put in a container and pressed at 100 MPa to produce a solid electrolyte layer. The cathode mixture was placed on one surface of the solid electrolyte layer, and they were pressed at 300 MPa, thereby producing a cathode layer on one surface of the solid electrolyte layer. On the other surface of the solid electrolyte layer where no cathode layer was formed, an In foil (diameter 9 mm) and a Li foil (diameter 6 mm) were placed in this order, which were raw materials of an anode layer. Then, a SUS foil was placed as a cathode collector on the cathode layer side, and another SUS foil was placed as an anode collector on the anode layer side, thereby obtaining a stack. A fixing pressure of 10 N·m (corresponding to 60 MPa) was applied to the obtained stack.

For conditioning, the stack was discharged to a voltage of 0.8 V vs Li-In (1.42 V vs Li/Li⁺) at a current density of 0.255 mA/cm² (corresponding to 0.1 C (where 1 C = 2.55 mA/cm²)). Accordingly, the In and Li foils were alloyed to obtain a Li-In alloy as an anode layer, thereby producing an all-solid-state battery consisting of the cathode collector, the cathode layer, the solid electrolyte layer, the anode layer and the anode collector.

### [Examples 3 and 4 and Comparative Example 3]

An all-solid-state battery was produced in the same manner as Example 1, except that in the production of the cathode mixture, NbCl₅ was used as the metal chloride instead of VCl₃, and the metal chloride (NbCl₅) was weighed out so that it was 2.5% by mass (in Example 3), 5% by mass (in Example 4) and 10% by mass (in Comparative Example 3) of the cathode layer.

An all-solid-state battery was produced in the same manner as Example 1, except that in the production of the cathode mixture, TaCl₅ was used as the metal chloride instead of VCl₃, and the metal chloride (TaCl₅) was weighed out so that it was 2.5% by mass (in Example 5), 5% by mass (in Example 6) and 10% by mass (in Comparative Example 4) of the cathode layer.

### [Examples 7 to 11]

An all-solid-state battery was produced in the same manner as Example 1, except that in the production of the cathode mixture, MgCl₂ was used as the metal chloride instead of VCl₃, and the metal chloride (MgCl₂) was weighed out so that it was 1.5% by mass (in Example 7), 2.5% by mass (in Example 8), 3.5% by mass (in Example 9), 5% by mass (in Example 10) and 10% by mass (in Example 11) of the cathode layer.

### [Comparative Example 5]

An all-solid-state battery was produced in the same manner as Example 1, except that in the production of the cathode mixture, SiCl₄ was used as the metal chloride instead of VCl₃, and the metal chloride (SiCl₄) was weighed out so that it was 2.5% by mass (in Comparative Example 5) of the cathode layer.

### [Example 12]

An all-solid-state battery was produced in the same manner as Example 1, except that in the production of the cathode mixture, MnCl₂ was used as the metal chloride instead of VCl₃, and the metal chloride (MnCl₂) was weighed out so that it was 2.5% by mass (in Example 12) of the cathode layer.

### [Comparative Example 6]

An all-solid-state battery was produced in the same manner as Example 1, except that in the production of the cathode mixture, FeCl₂ was used as the metal chloride instead of VCl₃, and the metal chloride (FeCl₂) was weighed out so that it was 2.5% by mass (in Comparative Example 6) of the cathode layer.

### [Example 13]

An all-solid-state battery was produced in the same manner as Example 1, except that in the production of the cathode mixture, YCl₃ was used as the metal chloride instead of VCl₃, and the metal chloride (YCl₃) was weighed out so that it was 2.5% by mass (in Example 13) of the cathode layer.

### [Examples 14 to 16]

An all-solid-state battery was produced in the same manner as Example 1, except that in the production of the cathode mixture, InCl₃ was used as the metal chloride instead of VCl₃, and the metal chloride (InCl₃) was weighed out so that it was 2.5% by mass (in Example 14), 5% by mass (in Example 15) and 10% by mass (in Example 16) of the cathode layer.

### [Example 17]

An all-solid-state battery was produced in the same manner as Example 1, except that in the production of the cathode mixture, SnCl₂ was used as the metal chloride instead of VCl₃, and the metal chloride (SnCl₂) was weighed out so that it was 2.5% by mass (in Example 17) of the cathode layer.

### (Electrochemical measurement)

At 25°C, a constant current charge-discharge test was carried out on the all-solid-state batteries produced in Examples 1 to 17 and Comparative Examples 1 to 6, in a cut-off voltage range of 2.7 V - 0.8 V vs Li-In (3.32 V - 1.42 V vs Li/Li⁺).

Table 1 shows the results of measuring the initial discharge capacity (mAh/g-S-Li₃PS₄-C) of each of the all-solid-state batteries produced in Examples 1 to 6 and Comparative Examples 1 to 4 and the discharge capacity (mAh/g-S-Li₃PS₄-C) thereof after 20 cycles, both of which were based on the mass of the cathode layer excluding the mass of the add-in material.

Table 2 shows the results of measuring the initial discharge capacity (mAh/g-cathode) of each of the all-solid-state batteries produced in Examples 1 and 2 and Comparative Examples 1 and 2 and the discharge capacity (mAh/g-cathode) thereof after 20 cycles, both of which were based on the mass of the cathode layer including the mass of the add-in material (VCl₃).

Table 3 shows the results of measuring the initial discharge capacity (mAh/g-S-Li₃PS₄-C) of each of the all-solid-state batteries produced in Examples 7 to 17 and Comparative Examples 1, 5 and 6 and the discharge capacity (mAh/g-S-Li₃PS₄-C) thereof after 10 cycles, both of which were based on the mass of the cathode layer excluding the mass of the add-in material.

The initial discharge capacity is the discharge capacity of the all-solid-state battery during the initial discharge, which was obtained after conditioning the stack.

The discharge capacity (mAh/g-S-Li₃PS₄-C) of the all-solid-state battery based on the mass of the cathode layer excluding the mass of the add-in material, is a discharge capacity used to compare the usage of the cathode active material in the cathode layer to Comparative Example 1 in which any add-in material was not contained.

The discharge capacity (mAh/g-cathode) of the all-solid-state battery based on the mass of the cathode layer including the mass of the add-in material, is a discharge capacity in consideration of the energy density of the cathode layer.

**[Table 1]**

| | Add-in material | Content of add-in material | Initial discharge capacity | Discharge capacity after 20 cycles |
|---|---|---|---|---|
| | | (% by mass) | (mAh/g-S-Li₃PS₄-C) | (mAh/g-S-Li₃PS₄-C) |
| Comparative Example 1 | - | 0 | 416.0 | 427.2 |
| Example 1 | VCl₃ | 2.5 | 439.5 | 466.8 |
| Example 2 | VCl₃ | 5 | 431.2 | 455.8 |
| Comparative Example 2 | VCl₃ | 10 | 401.6 | 422.7 |
| Example 3 | NbCl₅ | 2.5 | 431.5 | 458.4 |
| Example 4 | NbCl₅ | 5 | 422.6 | 445.5 |
| Comparative Example 3 | NbCl₅ | 10 | 327.5 | 354.1 |
| Example 5 | TaCl₅ | 2.5 | 436.4 | 460.2 |
| Example 6 | TaCl₅ | 5 | 423.5 | 438.7 |
| Comparative Example 4 | TaCl₅ | 10 | 342.9 | 362.8 |

**[Table 2]**

| | Content of VCl₃ | Initial discharge capacity | Discharge capacity after 20 cycles |
|---|---|---|---|
| | (% by mass) | (mAh/g-cathode) | (mAh/g-cathode) |
| Comparative Example 1 | 0 | 416.0 | 427.2 |
| Example 1 | 2.5 | 429.0 | 455.0 |
| Example 2 | 5 | 410.0 | 433.0 |
| Comparative Example 2 | 10 | 361.0 | 380.0 |

**[Table 3]**

| | Add-in material | Content of add-in material | Initial discharge capacity | Discharge capacity after 10 cycles |
|---|---|---|---|---|
| | | (% by mass) | (mAh/g-S-Li₃PS₄-C) | (mAh/g-S-Li₃PS₄-C) |
| Comparative Example 1 | - | 0 | 416.0 | 427.7 |
| Example 7 | MgCl₂ | 1.5 | 420.0 | 434.6 |
| Example 8 | MgCl₂ | 2.5 | 452.0 | 469.9 |
| Example 9 | MgCl₂ | 3.5 | 442.2 | 457.3 |
| Example 10 | MgCl₂ | 5 | 424.8 | 443.1 |
| Example 11 | MgCl₂ | 10 | 427.6 | 447.9 |
| Comparative Example 5 | SiCl₄ | 2.5 | 413.5 | 425.2 |
| Example 12 | MnCl₂ | 2.5 | 433.6 | 449.4 |
| Comparative Example 6 | FeCl₂ | 2.5 | 416.3 | 424.0 |
| Example 13 | YCl₃ | 2.5 | 433.0 | 448.3 |
| Example 14 | InCl₃ | 2.5 | 452.1 | 466.6 |
| Example 15 | InCl₃ | 5 | 439.3 | 457.1 |
| Example 16 | InCl₃ | 10 | 416.7 | 430.4 |
| Example 17 | SnCl₂ | 2.5 | 447.1 | 466.5 |

### (Evaluation results)

FIG. 2 is a graph showing the relationship between the number of charge and discharge cycles of the all-solid-state battery in which the add-in material was VCl₃ and the discharge capacity of the all-solid-state battery based on the mass of the cathode layer excluding the mass of the add-in material. FIG. 2 shows the results of the cases where the content of the add-in material was 0% by mass, 2.5% by mass, 5% by mass and 10% by mass.

FIG. 3 is a graph showing the relationship between the number of charge and discharge cycles of the all-solid-state battery in which the add-in material was NbCl₅ and the discharge capacity of the all-solid-state battery based on the mass of the cathode layer excluding the mass of the add-in material. FIG. 3 shows the results of the cases where the content of the add-in material was 0% by mass, 5% by mass and 10% by mass.

FIG. 4 is a graph showing the relationship between the number of charge and discharge cycles of the all-solid-state battery in which the add-in material was TaCl₅ and the discharge capacity of the all-solid-state battery based on the mass of the cathode layer excluding the mass of the add-in material. FIG. 4 shows the results of the cases where the content of the add-in material was 0% by mass, 5% by mass, 10% by mass and 20% by mass.

FIG. 5 is a graph showing the relationship between the number of charge and discharge cycles of the all-solid-state battery in which the add-in material was VCl₃ and the discharge capacity of the all-solid-state battery based on the mass of the cathode layer including the mass of the add-in material. FIG. 5 shows the results of the cases where the content of the add-in material was 0% by mass, 2.5% by mass, 5% by mass and 10% by mass.

### (Comparison of the discharge capacities of the all-solid-state batteries based on the mass of the cathode layer excluding the mass of the add-in material)

As shown by Examples 1 to 6 in Table 1, in the case where the add-in material was VCl₃, NbCl₅ or TaCl₅, both the initial discharge capacity (mAh/g-S-Li₃PS₄-C) and the discharge capacity (mAh/g-S-Li₃PS₄-C) after 20 cycles, both of which were based on the mass of the cathode layer excluding the mass of the add-in material, were larger than Comparative Example 1 in which any add-in material was not added, and the discharge capacity and cycle characteristics of the all-solid-state batteries were excellent. This is thought to be because, by the addition of the metal chloride, the Li ion transporting ability of the cathode layer was increased, and the usage of the cathode active material was increased.

As shown by Examples 7 to 17 in Table 3, in the case where the add-in material was MgCl₂, InCl₃, MnCl₂, YCl₃ or SnCl₂, both the initial discharge capacity (mAh/g-S-Li₃PS₄-C) and the discharge capacity (mAh/g-S-Li₃PS₄-C) after 10 cycles, both of which were based on the mass of the cathode layer excluding the mass of the add-in material, were larger than Comparative Example 1 in which any add-in material was not added, and the discharge capacity and cycle characteristics of the all-solid-state battery were excellent.

As shown by Comparative Examples 2 to 4 in Table 1, in the case where the VCl₃, NbCl₅ or TaCl₅ content was 10% by mass, both the initial discharge capacity and the discharge capacity after 20 cycles were equivalent to or lower than Comparative Example 1 in which any add-in material was not added. This is thought to be because, when the add-in material content was too large, to the contrary, the charge-discharge reaction of the cathode active material was inhibited.

Meanwhile, as shown by Examples 11 and 16 in Table 3, in the case where the add-in material was MgCl₂ or InCl₃, both the initial discharge capacity and the discharge capacity after 10 cycles were larger than Comparative Example 1 in which any add-in material was not added, even when the content of the add-in material was 10% by mass, and the discharge capacity and cycle characteristics of the all-solid-state battery were excellent.

Also, as shown by Comparative Example 5 and 6 in Table 3, in the case where the add-in material was SiCl₄ or FeCl₂, both the initial discharge capacity and the discharge capacity after 10 cycles were lower than Comparative Example 1 in which any add-in material was not added, even when the content of the add-in material was 2.5% by mass.

From the above results, it was revealed that in the case where the add-in material was at least one metal chloride selected from the group consisting of MgCl₂, InCl₃, MnCl₂, YCl₃, SnCl₂, VCl₃, NbCl₅ and TaCl₅, as long as the content of the add-in material was at least less than 10% by mass, the discharge capacity (mAh/g-S-Li₃PS₄-C) based on the mass of the cathode layer excluding the mass of the add-in material, was larger than Comparative Example 1 in which any add-in material was not added. It was also revealed that in the case where the add-in material was at least one selected from the group consisting of MgCl₂ and InCl₃, the discharge capacity (mAh/g-S-Li₃PS₄-C) based on the mass of the cathode layer excluding the mass of the add-in material, was larger than Comparative Example 1 in which any add-in material was not added, even when the content of the add-in material was 10% by mass.

### (Comparison of the discharge capacities of the all-solid-state batteries based on the mass of the cathode layer including the mass of the add-in material)

As shown by Examples 1 and 2 in Table 2, in the case where the add-in material was VCl₃, the discharge capacity after 20 cycles (mAh/g-cathode) of the all-solid-state battery based on the mass of the cathode layer including the mass of the add-in material, was larger than Comparative Example 1 in which any add-in material was not added, when the content of the add-in material was 2.5% by mass or 5% by mass, and the discharge capacity after 20 cycles and cycle characteristics of the all-solid-state battery were excellent.

This result is thought to be because, over the above-described range of the add-in material content, the effect of increasing the usage of the cathode active material by the add-in material was larger than the increase in the mass of the cathode layer due to the increase in the content of the add-in material.

### REFERENCE SIGNS LIST

- 1.: Cathode layer
- 2.: Anode layer
- 3.: Electrolyte layer
- 4.: Cathode collector
- 5.: Anode collector
- 10.: Battery

## Claims

1. A battery comprising a cathode layer, an electrolyte layer and an anode layer,
wherein the cathode layer comprises a cathode active material and an add-in material;
wherein the cathode active material comprises a S element;
wherein the add-in material comprises a Cl element and at least one metal element selected from the group consisting of a Mn element, a Y element, a Sn element, a V element, a Nb element and a Ta element; and
wherein the add-in material is less than 10% by mass of the cathode layer.

2. A battery comprising a cathode layer, an electrolyte layer and an anode layer,
wherein the cathode layer comprises a cathode active material and an add-in material;
wherein the cathode active material comprises a S element;
wherein the add-in material comprises a Cl element and at least one metal element selected from the group consisting of a Mg element and an In element; and
wherein the add-in material is 15% by mass or less of the cathode layer.

3. The battery according to Claim 1 or 2, wherein the add-in material is 1% by mass or more and 5% by mass or less of the cathode layer.

4. The battery according to Claim 1 or 2,
wherein the anode layer comprises an anode active material, and
wherein the anode active material is at least one selected from the group consisting of elemental Li and a Li alloy.

5. An all-solid-state battery comprising the battery defined by Claim 1 or 2, wherein the electrolyte layer is a solid electrolyte layer containing a solid electrolyte.
